# EUROPÄISCHE PATENTANMELDUNG

(11) **EP 4 287 770 A1**
(43) Veröffentlichungstag der Anmeldung: **06.12.2023**
(21) Anmeldenummer: 23174947.4
(22) Anmeldetag: 23.05.2023
(51) Int. Cl.: H05B 6/12

(54) **INDUKTIONSKOCHFELD MIT EINER TRÄGERSTRUKTUR MIT ANTENNEN UND/ODER SENSOREN, VERFAHREN ZUR HERSTELLUNG EINER SOLCHEN TRÄGERSTRUKTUR UND EINE VERWENDUNG EINER TRÄGERSTRUKTUR FÜR EIN INDUKTIONSKOCHFELD**

(30) Priorität: 30.05.2022 DE 102022205386
(71) Anmelder: E.G.O. Elektro-Gerätebau GmbH, 75038 Oberderdingen (DE)
(72) Erfinder: Egenter, Christian, 75015 Bretten (DE); Wächter, Ulrich, 76646 Bruchsal (DE); Müller, Max-Felix, 75038 Oberderdingen (DE); Bellm, Mathias, 76698 Ubstadt-Weiher (DE); Rupp, Michael, 75031 Eppingen (DE)
(74) Vertreter: Patentanwälte Ruff, Wilhelm, Beier, Dauster & Partner mbB

(57) **Zusammenfassung**

Ein Induktionskochfeld mit einer Kochfeldplatte und mit einer flächigen und flachen Trägerstruktur weist ein flexibles Gewebe als Träger auf, auf dem Antennen und/oder Sensoren als Leitungen mittels Stickverfahren aufgebracht sind. Die Antennen und/oder Sensoren weisen Zuleitungen auf, die mittels Stickverfahren auf dem Träger aufgebracht und/oder befestigt sind und die sich untereinander mit anderen Leitungen auf derselben Oberfläche des Trägers kreuzen, wobei sie elektrisch gegeneinander isoliert sind. Die Trägerstruktur weist eine Temperaturbeständigkeit von ≥ 200°C auf. Sie ist auf einem flächigen und flachen Halter angeordnet und damit samt Antennen und/oder Sensoren an eine Unterseite der Kochfeldplatte gedrückt.

## Beschreibung

### ANWENDUNGSGEBIET UND STAND DER TECHNIK

Die Erfindung betrifft ein Induktionskochfeld mit einer Trägerstruktur mit Antennen und/oder Sensoren, ein Verfahren zur Herstellung einer solchen Trägerstruktur und eine Verwendung einer Trägerstruktur für ein Induktionskochfeld.

Eine Verwendung eines Induktionskochfelds zur drahtlosen Übertragung von Energie in Richtung eines elektrischen Verbrauchers mittels induktiver Kopplung ist bekannt aus der deutschen Patentanmeldung DE 102021201220 A1, auf welche hiermit ausdrücklich Bezug genommen wird. Eine solche drahtlose Übertragung von Energie wird auch als Wireless Power Transfer, WPT, bezeichnet.

### AUFGABE UND LÖSUNG

Der Erfindung liegt die Aufgabe zugrunde, ein eingangs genanntes Induktionskochfeld mit einer Trägerstruktur mit Antennen und/oder Sensoren, ein Verfahren zur Herstellung einer solchen Trägerstruktur und eine Verwendung einer solchen Trägerstruktur für ein solches Induktionskochfeld zu schaffen, mit denen Probleme des Standes der Technik gelöst werden können und es insbesondere ermöglicht wird, ein Induktionskochfeld sicher und praxistauglich betreiben und bedienen zu können bei möglichst hoher Bediensicherheit und möglichst hohem Bedienkomfort, insbesondere zum Betrieb eines elektrischen Verbrauchers auf dem Induktionskochfeld mit drahtloser Übertragung von Energie vom Induktionskochfeld an den Verbraucher.

Gelöst wird diese Aufgabe durch ein Induktionskochfeld mit den Merkmalen des Anspruchs 1, durch ein Verfahren mit den Merkmalen des Anspruchs 17 sowie durch eine Verwendung mit den Merkmalen des Anspruchs 20. Vorteilhafte sowie bevorzugte Ausgestaltungen der Erfindung sind Gegenstand der weiteren Ansprüche und werden im Folgenden näher erläutert. Dabei werden manche der Merkmale nur für das Induktionskochfeld, nur für das Verfahren oder nur für die Verwendung beschrieben. Sie sollen jedoch unabhängig davon sowohl für ein Induktionskochfeld als auch für ein Verfahren sowie für eine Verwendung selbständig und unabhängig voneinander gelten können. Der Wortlaut der Ansprüche wird durch ausdrückliche Bezugnahme zum Inhalt der Beschreibung gemacht.

Das Induktionskochfeld weist eine Kochfeldplatte und eine Trägerstruktur auf, wobei die Trägerstruktur flächig und flach ausgebildet ist und ein flexibles Gewebe als flächiger und flacher Träger mit zwei Oberflächen sowie Antennen und/oder Sensoren auf dem Träger aufweist. Die Antennen und/oder die Sensoren als Leitungen sind mittels Stickverfahren zumindest auf einer Seite bzw. Oberfläche des Trägers aufgebracht und/oder befestigt, was bedeutet, dass die Leitungen auf die Oberfläche des Trägers aufgelegt werden und dann überstickt werden bzw. mit sogenannten Kreuzstichen, die durch den Träger hindurch verlaufen, auf dem Träger befestigt werden. Dies ist bekannt aus dem Stand der Technik, siehe beispielsweise die EP 3079443 A1.

Die Antennen und/oder die Sensoren weisen Zuleitungen auf, wobei diese Zuleitungen mittels eines vorgenannten Stickverfahrens auf dem Träger aufgebracht und/oder befestigt sind, wobei sich die Zuleitungen untereinander und/oder mit den Leitungen der Antennen und/oder mit den Sensoren auf derselben Oberfläche des Trägers kreuzen und dabei elektrisch gegeneinander isoliert sind. Dies bedeutet, sie können direkt übereinander verlaufen und sich dabei berühren, sind vorteilhaft aber gegeneinander elektrisch isoliert und somit signalmäßig getrennt. Die Trägerstruktur weist eine Temperaturbeständigkeit von mindestens 200°C auf, wodurch es möglich ist, auf dem Induktionskochfeld beispielsweise zum Anbraten von Speisen einen Topf oder eine Pfanne auf Temperaturen von etwa 300°C oder sogar noch mehr aufzuheizen, was unter der Kochfeldplatte eine genannte Temperatur von mindestens 200°C bewirken kann. Deswegen wird diese Temperaturbeständigkeit erfindungsgemäß vorgesehen. Die Trägerstruktur ist auf einem flächigen und flachen Halter angeordnet, der vorzugsweise fest ausgebildet sein kann, und ist mit diesem samt ihrer Antennen und/oder Sensoren direkt oder indirekt an eine Unterseite der Kochfeldplatte gedrückt, vorteilhaft elastisch angedrückt. Dafür kann eine Federeinrichtung odgl. vorgesehen sein. Ein solcher Halter kann eine Induktionsheizspule selbst sein, die beispielsweise in einem Kunststoffgehäuse oder zwischen dünnen elektrisch isolierendem Scheiben angeordnet ist. So könnte dieses Kunststoffgehäuse bzw. die Induktionsheizspule mit vorgenannten Federn gegen die Kochfeldplatte gedrückt sein. Vorteilhaft wird die Trägerstruktur mit einer Seite, auf der keine Antennen bzw. Sensoren angeordnet sind, direkt gegen die Kochfeldplatte gedrückt und die Antennen bzw. Sensoren werden nicht beschädigt. Die Trägerstruktur kann durch Einfügen oder Zwischenlegen einer elektrisch isolierende Scheibe auch indirekt an der Kochfeldplatte anliegen, um die elektrische Sicherheit zu verbessern.

Durch die Verwendung einer solchen Trägerstruktur mit einem ausreichend temperaturbeständigen Gewebe und von temperaturbeständigen Fäden zum Befestigen der Leitungen mittels Sticken sowie von temperaturbeständigen Zuleitungen, vorteilhaft gebildet durch elektrisch isolierte Drähte, kann eine Vielseitigkeit der Verwendung geschaffen werden.

In vorteilhafter Weiterbildung der Erfindung ist unter der Trägerstruktur mindestens eine Induktionsheizspule angeordnet zur induktiven Beheizung eines auf die Kochfeldplatte aufgestellten Kochgefäßes, ebenso zur drahtlosen Kommunikation und/oder zum genannten drahtlosen Übertragen von Energie an einen Verbraucher, wie es aus der vorgenannten deutschen Patentanmeldung DE 102021201220 A1 bekannt ist. Besonders vorteilhaft verlaufen mindestens eine Antenne und/oder mindestens ein Sensor mit weniger als ihrer gesamten Fläche über der Induktionsheizspule und/oder stehen seitlich bzw. radial außen zumindest teilweise über die Induktionsheizspule über. Die Antenne selbst kann auch kleiner sein als die Induktionsheizspule, vorzugsweise also nicht überstehen.

In Ausgestaltung der Erfindung können mindestens zwei Antennen und/oder Sensoren auf derselben Oberfläche des Trägers aufgebracht sein, vorteilhaft zwei Antennen und zwei bis vier Sensoren, vorzugsweise drei Sensoren. Die Sensoren können so aufgeteilt sein, dass sie in Teil-Sensoren vorhanden sind. Bevorzugt können die Sensoren auch als Antennen bzw. Spulen ausgebildet sein mit Teilflächen. In vorteilhafter Ausgestaltung sind alle Antennen und Sensoren auf derselben Oberfläche des Trägers aufgebracht sind, insbesondere auch deren sämtliche Leitungen bzw. Zuleitungen.

In weiterer Ausgestaltung der Erfindung kann der Träger mindestens einen von dem Träger abstehenden Überstandsbereich aufweisen, insbesondere mindestens drei Überstandsbereiche, die von dem Träger abstehen. Ein Überstandsbereich kann aus demselben durchgängigen Gewebe des Trägers gebildet sein, sodass vorteilhaft der Träger eine aus einem ganzen Stück herausgeschnitten Fläche aufweist, sodass eine integrale Verbindung mit den Überstandsbereichen gegeben ist. Auf dem Überstandsbereich wird vorteilhaft ein Abschnitt der Zuleitungen und/oder Antennen bzw. Sensoren aufgebracht und/oder befestigt ist. Insbesondere kann er dazu dienen, die Zuleitungen deutlich getrennt von den Antennen und Sensoren zu führen. Ein Überstandsbereich kann mit einer Länge zwischen 5% und 20% vom Außenrand des Trägers abstehen, wobei insbesondere eine Breite eines Überstandsbereichs zwischen 30% und 20% seiner Länge betragen kann.

In Weiterbildung der Erfindung können auf einem Überstandsbereich entweder nur Zuleitungen zu den Antennen, insbesondere zu allen Antennen, oder nur Zuleitungen zu einem Sensor, insbesondere nur zu einem einzigen Sensor, aufgebracht und/oder befestigt sein. So ist eine elektrische Trennung besser möglich, um eine geringere Störanfälligkeit zu erreichen.

In vorteilhafter Weiterbildung der Erfindung kann der Träger mehrere Überstandsbereiche für Zuleitungen zu den Sensoren außen am Träger aufweisen, wobei die Überstandsbereiche für die Sensoren besonders vorteilhaft gleich verteilt sein können.

In Ausgestaltung der Erfindung können Antennen oder Sensoren derart angeordnet sein, dass sie sich überlappen, vorteilhaft in den Bereichen, in denen zwei Sensoren benachbart sind. So können sie besser alternierend benutzt werden. Des Weiteren gibt es durch eine solche Überlappung, insbesondere bei den Sensoren, keine Bereiche mit reduzierter Sensitivität für die Erkennung von Gegenständen, Töpfen odgl. auf der Kochfeldplatte oberhalb der Trägerstruktur.

Bevorzugt sind die Zuleitungen aus ununterbrochenem Draht gebildet, wobei vorzugsweise der Draht jeweils auch mindestens eine Antenne bzw. mindestens einen Sensor bildet. Besonders bevorzugt bildet ein solcher Draht die Zuleitungen zu einer Antenne oder einem Sensor und auch dessen Leitungen selbst, also auch die Antennen bzw. den Sensor, und zwar vorteilhaft durchgängig bzw. ununterbrochen. Der Aufwand für eine elektrische Kontaktierung eingespart werden und der gesamte elektrische Widerstand ist geringer. Des Weiteren kann hier eine vorteilhafte Nutzung des Verfahrens des Befestigens solcher quasi loser Drähte auf der Trägerstruktur auch tatsächlich für den elektrischen Anschluss erfolgen. So können die Antennen und/oder Sensoren und die Zuleitungen dafür jeweils aus gemeinsamem ununterbrochenem Draht gebildet sein. Allgemein wird vorzugsweise ein Draht als einzelner Leiter oder Draht und somit keine Mehrfachlitze verwendet.

In vorteilhafter Ausgestaltung der Erfindung können ein Draht bzw. die Drähte oder alle Drähte eine temperaturbeständige Lackierung als elektrische Isolierung aufweisen, wie es vom Wickeln von Spulen bekannt ist. Dabei ist vorzugsweise jeder Draht als Einzellitze mittels einer temperaturbeständigen Lackierung nach außen bzw. gegen andere Drähte elektrisch isoliert, wobei insbesondere eine solche Lackierung eine Temperaturbeständigkeit von ≥ 200°C aufweist. Somit ist auch der Draht so temperaturbeständigen wie der Träger bzw. dessen Gewebe selbst, also auch die gesamte Trägerstruktur.

Ein Durchmesser des Drahts beträgt bevorzugt 0,1 mm bis 0,5 mm, vorzugsweise 0,15 mm bis 0,25 mm. Vorteilhaft sind die Durchmesser aller Drähte für die Antennen und Sensoren gleich bzw. wird insgesamt nur eine einzige Art von Draht verwendet. Dies macht die Herstellung einfacher. Vorzugsweise weisen die Drähte eine niederohmige Ausführung mit großer Güte auf. Insbesondere können es Kupferdrähte sein.

In vorteilhafter Weiterbildung können mindestens ein Sensor und/oder mindestens eine Antenne zwei parallel verlaufende Drähte als Leitung aufweisen, insbesondere die Antennen. Dies ermöglicht es, sie niederohmig auszugestalten bzw. den elektrischen Widerstand zu reduzieren. Als Alternative könnte ein etwas dickerer Draht mit insgesamt gleicher Querschnittsfläche zwei dünnere Drähte verwendet werden, welcher dann aber schwieriger zu biegen wäre bzw. schwieriger um Radien geführt werden kann oder nur in größeren Radien verlegt werden kann. Für die Sensoren werden in der Regel, insbesondere bei genannter niedrigerer Betriebsfrequenz, ohnehin keine dicken Drähte benötigt. Vorteilhaft können die Zuleitungen verdrillt oder in einer Kreuzungsstruktur ausgebildet sein, und zwar entweder derart mittels Stickverfahren auf dem Träger befestigt sein oder zumindest außerhalb des Trägers derart verlaufen. So kann eine Reduzierung von Einkopplungen von Störsignalen in die Zuleitung erreicht werden.

Bevorzugt sind die Antennen als NFC-Antennen oder als RFID-Antennen ausgebildet, wie es aus dem eingangs genannten Stand der Technik bekannt ist. Dazu können sie wie vorbeschrieben mit einem gedoppelten Draht aus gleichem Material und gleicher Art gefertigt sein. Diese NFC-Antennen werden genutzt zur Kommunikation vom Induktionskochfeld mit einem darauf aufgestellten Küchengerät, das dafür ausgebildet ist. Das Küchengerät kann auch über die NFC-Antenne mit einer begrenzten elektrischen Leistung versorgt werden, um beispielsweise Bedien- und Anzeigeelemente nach dem Aufstellen versorgen zu können. So ist eine Bedienung im Küchengerät zur Aktivierung der Leistungsübertragung möglich, ohne dass ein Energiespeicher, beispielsweise eine Batterie oder ein Akku, benötigt wird.

Vorteilhaft sind die Sensoren als sogenannte FOD-Sensoren ausgebildet, die flächig ausgebildet sind, die auch als Topferkennungssensoren entsprechend der EP 3079443 A1 zur Erkennung von Objekten oder Gegenständen auf der Kochfeldplatte oberhalb der Trägerstruktur bekannt sind. Damit kann geprüft werden, ob sich unzulässige Fremdobjekte (=Foreign Objects) auf der Aufstellfläche im Wirkbereich des Induktors bzw. der Induktionsheizspule für die Energieübertragung befinden (=Foreign Object Detection, FOD). In diesem Fall wird das Erkennen des Fremdobjekts an das Induktionskochfeld gemeldet und eine Leistungsanforderung von zu übertragender Energie zurückgewiesen. Insbesondere sind die FOD-Sensoren dabei als Spulen ausgebildet, vorzugsweise sind sie anders als die vorbeschriebenen Antennen aus einem einzelnen Draht gebildet.

In Weiterbildung der Erfindung kann vorgesehen sein, dass sich benachbart liegende FOD-Sensoren überlappen und sich ihre Leitungen dabei kreuzen. Vorteilhaft können die FOD-Sensoren in der Form von Kreissegmenten ausgebildet sein und insbesondere gleichartig und gleich groß ausgebildet sein. Vorzugsweise kann die Trägerstruktur vier bis acht FOD-Sensoren pro Induktionsheizspule aufweisen, insbesondere sechs, wobei jeweils zwei FOD-Sensoren mit ihren Sensorflächen elektrisch miteinander verbunden sind und nach außen elektrisch angeschlossen sind mit zwei Zuleitungen, sie bilden also sozusagen als Teil-Sensoren einen gemeinsamen Sensor. Die beiden FOD-Sensoren bzw. Sensorflächen liegen vorzugsweise gegenüber. Vorteilhaft besitzen die miteinander verbundenen FOD-Sensoren einen gegensinnigen Wicklungssinn, so dass sich die Wirkung des durchdringenden Magnetfelds der Induktionsspule in die FOD-Sensoren bzw. Sensorflächen gegenseitig kompensiert. Genau eine erste Zuleitung läuft zu dem Träger und auf dessen Gewebe und bildet darauf einen FOD-Sensor als Teil-Sensor in Form einer Spule mit Verlauf von außen nach innen. Dann verläuft sie durch den Mittelbereich des Trägers zu dem gegenüberliegenden Bereich des Trägers und bildet den anderen FOD-Sensor als Teil-Sensor in Form einer Spule mit Verlauf von innen nach außen, wobei sie dann als die andere zweite Zuleitung neben der ersten Zuleitung von dem Träger weg läuft. Dabei können diese erste Zuleitung und diese zweite Zuleitung von dem Mittelbereich nach außen parallel und mit geringem Abstand von 1 mm bis 5 mm nebeneinander verlaufen. So können allgemein die Zuleitungen zu den FOD-Sensoren zuerst von radial außen in den Mittelbereich des Trägers hinein verlaufen und dann von diesem weg zu den FOD-Sensoren. Dabei kann vorzugsweise vorgesehen sein, dass die Zuleitungen auf dem Weg von außen in den Mittelbereich des Trägers hinein nicht diejenigen FOD-Sensoren, die von ihnen gebildet werden, überlappen. Dies verringert eine Störanfälligkeit.

In einer weiteren Ausgestaltung wird auf das zusätzliche Aufbringen von FOD-Sensoren verzichtet, es sind also nur Antennen, insbesondere NFC-Antennen, vorgesehen. In diesem Fall kann eine gemessene Impedanz an der NFC-Antenne oder eine Dämpfungsmessung über die Induktionsspule alternativ als FOD-Sensor verwendet werden. Dies reduziert zwar einerseits die Sensitivität zum Auffinden/Erkennen von Fremdobjekten (FOD), reduziert aber andererseits auch den Aufwand für eine Fremdobjekterkennung (FOD) auf dem Kochfeld.

Wie zuvor angedeutet worden ist, kann vorteilhaft vorgesehen sein, dass eine elektrische Verbindung von parallel verlaufenden Drähten zu den Antennen und/oder Sensoren im Bereich eines Anschlusses an eine Steuerung elektrisch verbunden sind. Dies bedeutet, dass diese Drähte bzw. Zuleitungen von der Trägerstruktur durchgehend und ununterbrochen, insbesondere auch nicht unterbrochen durch eine Steckverbindung odgl., zu einem elektrischen Anschluss an die Steuerung, beispielsweise auf einer Leiterplatte, auf der ein die Steuerung bildender Controller angeordnet ist, verlaufen und erst dort gesteckt oder geschraubt werden.

In vorteilhafter Weiterbildung der Erfindung können die Zuleitungen von der Trägerstruktur abstehen und ununterbrochen weiterlaufen als Anschluss an eine Steuerung. Dabei können sie eine Länge von mindestens 20 cm aufweisen, insbesondere eine Länge von mindestens 50 cm. Dies sollte genügen, um in einem Induktionskochfeld von einer Induktionsheizeinrichtung bis zu einer Steuerung bzw. einer Leiterplatte mit der Steuerung darauf zu reichen.

In möglicher Ausgestaltung der Erfindung kann zwischen der Trägerstruktur mit den Zuleitungen, Antennen und/oder Sensoren einerseits und der Unterseite der Kochfeldplatte andererseits eine elektrische Isolierung vorgesehen sein, insbesondere eine flächige elektrische Isolierung. Eine solche elektrische Isolierung ist vorteilhaft als eine eigenständig handhabbare Baueinheit ausgebildet oder kann durch den Träger selbst gebildet sein, indem der Träger mit einer Unterseite, auf der keine Zuleitungen, Antennen und/oder Sensoren aufgebracht und/oder befestigt sind, an der Unterseite der Kochfeldplatte als elektrische Isolierung anliegt. Eine eigenständig handhabbare Baueinheit als elektrische Isolierung könnte eine dünne Scheibe aus Mica bzw. Glimmer sein.

Um ein zuvor beschriebenes Induktionskochfeld herzustellen können die folgenden Schritte durchgeführt werden. Zuerst wird ein flexibles Gewebe als flächiger und flacher Träger mit zwei Oberflächen, die sich gegenüber liegen, bereitgestellt. Auf einer Seite bzw. Oberfläche des Trägers werden Antennen und/oder Sensoren zumindest mittels Stickverfahren aufgebracht und/oder befestigt, also ein Draht oder eine Leitung, um diese zu bilden. Möglicherweise kann auch ein Verkleben als vorläufige Befestigung oder Vor-Fixierung verwendet werden. Als dauerhafte Befestigung eignet sich ein Verkleben aufgrund der gewünschten hohen Temperaturbeständigkeit nicht so gut. Auch Zuleitungen für die Antennen und/oder die Sensoren werden mittels Stickverfahren, insbesondere identische wie für die Antennen und/oder Sensoren selbst, auf den Träger aufgebracht und/oder befestigt. Dabei können die Zuleitungen untereinander und/oder mit den Antennen und/oder mit den Sensoren auf derselben Oberfläche des Trägers gekreuzt werden, wobei sie dabei elektrisch gegeneinander isoliert sind. Mindestens zwei Antennen und/oder Sensoren können dabei auf derselben Oberfläche des Trägers aufgebracht werden. Vorteilhaft werden eben alle Antennen und/oder Sensoren, insbesondere alle elektrisch leitfähigen Teile, auf einer einzigen Oberfläche des Trägers aufgebracht, während die andere Oberfläche des Trägers frei davon ist.

Beim Aufbringen können die Zuleitungen verdrillt werden oder in einer Kreuzungsstruktur mittels Stickverfahren auch schon auf dem Träger befestigt werden. Vor allem können sie verdrillt werden, sobald sie den Träger verlassen und nicht mehr darauf befestigt sind. Dies dient wie vorbeschrieben zur Reduzierung von Einkopplungen von Störsignalen in die Zuleitung.

In weiterer Ausgestaltung des erfindungsgemäßen Verfahrens ist es möglich, dass nach Fertigstellung der Trägerstruktur mindestens eine Zuleitung wieder von dem Überstandsbereich gelöst wird und anderes verlegt wird. Bei diesem anderen Verlegen wird sie vorteilhaft nicht mehr an dem Träger oder an der Trägerstruktur durch Sticken befestigt, wobei sie insbesondere wieder auf den Träger bzw. auf die Trägerstruktur gelegt wird. Alternativ kann sie auch wieder auf dem Träger befestigt werden. Dabei kann eine Zuleitung bis zu einem Anschlussbereich des Trägers geführt sein, von dem aus mehrere Zuleitungen zu den Antennen und/oder Sensoren weg geführt sind nach außen. Hier kann auch vorgesehen sein, dass eine oder mehrere Zuleitungen durch ein Loch im Träger geführt sind und sozusagen auf der anderen Seite oder Oberfläche des Trägers verlaufen.

Eine vorbeschriebene Trägerstruktur kann für ein Induktionskochfeld verwendet werden, wobei das Induktionskochfeld eine Vorrichtung zum drahtlosen Übertragen von Energie in Richtung eines elektrischen Verbrauchers auf dem Induktionskochfeld mittels induktiver Kopplung aufweist, also ein eingangs genannter WPT. Dabei wird vorzugsweise eine Induktionsheizspule des Induktionskochfelds als Vorrichtung zum drahtlosen Übertragen von Energie verwendet wird, beispielsweise an ein darüber auf eine Kochfeldplatte aufgestelltes Küchengerät. Die genannten Antennen dienen zur Kommunikation des Induktionskochfelds mit den Küchengerät, insbesondere mittels NFC. Vorteilhaft wird eine Induktionsheizspule kurzzeitig abgestellt, damit diese NFC-Kommunikation erfolgen kann. So stören sich die beiden Magnetfelder nicht. Die genannten Sensoren dienen dazu, Gegenstände oder Objekte auf der Kochfeldplatte zu erkennen, die weder ein geeignetes Küchengerät sind, das induktiv mit Energie versorgt werden soll, noch ein Topf, der induktiv direkt beheizt werden soll.

Hinsichtlich der Grundlagen zu WPT sei auf die einschlägige Fachliteratur und die eingangs genannte Patentanmeldung DE 102021201220 A1 verwiesen. Bevorzugt wird das Induktionskochfeld gemäß dem WPC (Wireless Power Consortium) Ki (Cordless Kitchen) Verfahren betrieben. Dabei kann eine Induktionsheizspule des Induktionskochfelds verwendet werden zur drahtlosen Übertragung von Energie an einen elektrischen Verbraucher, beispielsweise an ein auf eine Kochfeldplatte aufgestelltes Küchengeräten wie einen Mixer odgl.. Eine Leistung der Energieübertragung kann sekundärseitig durchaus im Bereich von 200 W bis 2,2 kW liegen. Gleichzeitig kann eine Kommunikation des Induktionskochfelds mit dem Küchengerät stattfinden, hierfür wird ein NFC-Verfahren bzw. eine NFC-Kommunikation bevorzugt, wie dies aus der deutschen Patentanmeldung DE 102021212550 A1 bekannt ist, auf welche hiermit durch ausdrückliche Bezugnahme Bezug genommen wird.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: eine Schnittdarstellung durch ein erfindungsgemäßes Kochfeld mit einer Induktionsheizeinrichtung und einem Antennenträger und einer Kochfeldplatte,
- Fig. 2: eine Draufsicht auf die Bestückungsseite des Antennenträgers mit Darstellung der Struktur von NFC-Antennen und von FOD-Sensoren,
- Fig. 3: eine Vergrößerung auf einen Abschnitt des Antennenträgers aus Fig. 2,
- Fig. 4: eine nochmalige Vergrößerung auf einen Ausschnitt der Darstellung aus Fig. 3 mit parallel verlegten Leitungen für die NFC-Antennen und einfach verlegten Leitungen für die FOD-Sensoren.

### DETAILLIERTE BESCHREIBUNG DER AUSFÜHRUNGSBEISPIELE

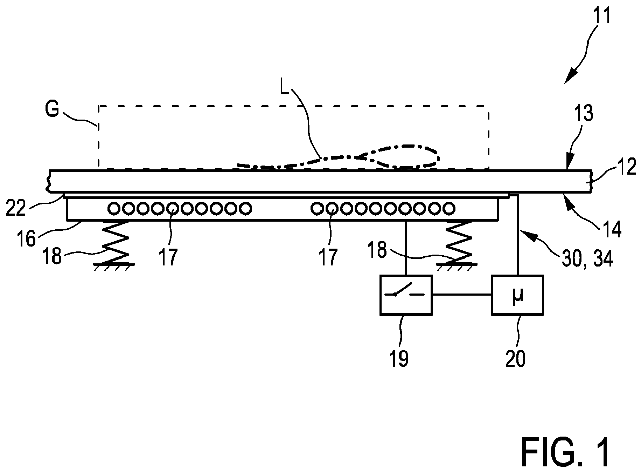

In der Fig. 1 ist ein erfindungsgemäßes Kochfeld 11 als Induktionskochfeld dargestellt im vereinfachten seitlichen Schnitt. Grundsätzlich ist der Aufbau solcher Induktionskochfelder ja bekannt, es wird auf die EP 3079443 A1 verwiesen. Das Kochfeld 11 weist eine Kochfeldplatte 12 mit einer Oberseite 13 und einer Unterseite 14 auf. Eine Induktionsheizeinrichtung 16 unter der Kochfeldplatte 12 definiert auf bekannte Art und Weise eine Kochstelle. Mehrere solcher Induktionsheizeinrichtungen 16 können im Betrieb zusammengeschaltet werden, um eine vergrößerte Kochstelle für sehr große Kochgefäße wie beispielsweise Bräter odgl. schaffen zu können. Die Induktionsheizeinrichtung 16 weist eine Induktionsheizspule 17 auf, die mit ihren Windungen in einer Ebene dargestellt ist.

Zur Ansteuerung und Leistungsversorgung der Induktionsheizeinrichtung 16 bzw. der Induktionsheizspule 17 ist ein Umrichter 19 schematisch dargestellt, der auch als Gleichrichter und Wechselrichter angesehen werden kann. Der Umrichter 19 ist mit einer Steuerung 20 für das gesamte Kochfeld 11 verbunden und erhält von dieser Befehle. Insbesondere ist die Steuerung 20 auch mit einer nicht dargestellten Bedieneinrichtung des Kochfelds 11 verbunden zur Eingabe von Bedienbefehlen.

Zwischen Induktionsheizeinrichtung 16 und Unterseite 14 der Kochfeldplatte 12 ist ein flacher und flächiger Antennenträger 22 angeordnet. Wie aus der Fig. 1 zu ersehen ist, wird der Antennenträger 22 sozusagen von der Induktionsheizeinrichtung 16 an die Unterseite 14 der Kochfeldplatte 12 angedrückt, um so ein sicheres Anliegen an der Kochfeldplatte zu gewährleisten. Hierzu sind Federn 18 schematisch dargestellt. So benötigt er keine eigene Befestigung und es ist möglich, ihn flexibel und biegeschlaff auszubilden wie eingangs erwähnt und trotzdem stabil und sicher anzuordnen. Es ist zu erkennen, dass der Antennenträger 22 bis an den äußeren Rand der Induktionsheizeinrichtung 16 reicht bzw. sogar geringfügig darüber überstehen kann. Damit ist klar, dass er sowie darauf angeordnete Antennen und/oder Sensoren den Außenrand bzw. die Flächenbedeckung der Induktionsheizspule 17 seitlich überragen, vorteilhaft um 1 cm bis 2 cm. Dies ist für eine sichere Entdeckung von Gegenständen im Wirkungsbereich der Induktionsheizspule 17 vorteilhaft.

In weiterer möglicher Ausgestaltung der Erfindung kann der Antennenträger 22 auch auf einer flexiblen Schicht aus elektrisch isolierendem und thermisch dämmendem Material aufliegen, die über der Induktionsheizspule 17 verläuft und deren Oberseite bedeckt. Eine solche flexible Schicht kann eine Dicke von 1 mm bis 5 mm aufweisen.

Für die Funktion des Kochfelds 11 ist es bei einer Betriebsmöglichkeit vorgesehen, durch Betrieb der Induktionsheizspule 17 auf bekannte Art und Weise ein gestrichelt dargestelltes Gerät G darüber zu beheizen, wenn dieses Gerät G beispielsweise ein normaler Kochtopf ist, also induktiv zu beheizen. Dann wird die Induktionsheizspule 17 je nach vorgegebener Leistung mit relativ hoher elektrischer Leistung betrieben, beispielsweise 2,2 kW oder sogar 3,6 kW.

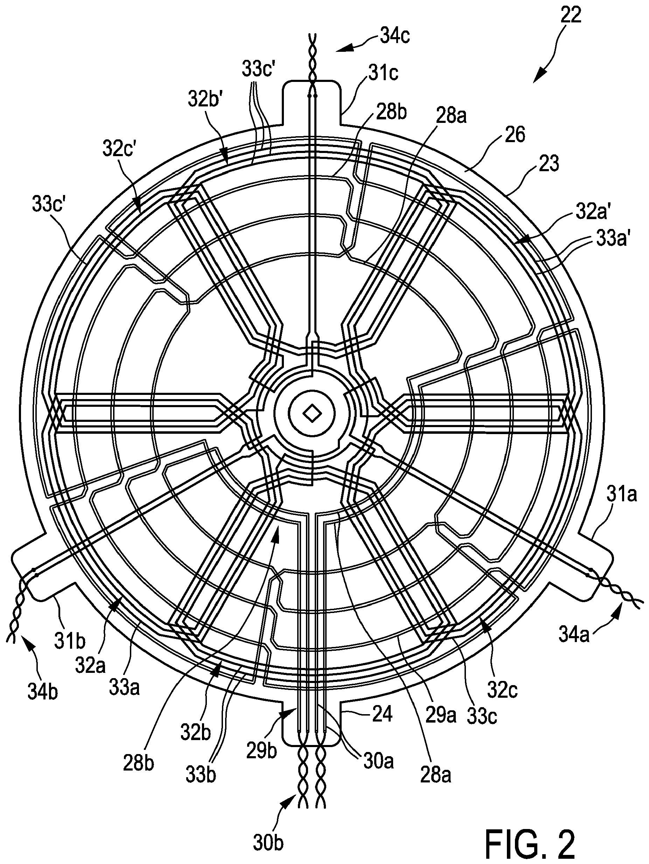

Wird bei einer anderen Betriebsmöglichkeit entsprechend einem eingangs genannten Induktionskochfeld kein Gerät bzw. Kochtopf induktiv erhitzt, sondern mittels induktiv übertragener Leistung ein sogenanntes Aufsatzgerät betrieben, beispielsweise ein Küchenmixer, so erfolgt dies auch über von der Induktionsheizspule 17 übertragene Leistung mittels eines Wechselmagnetfelds. Dies entspricht der Betriebsmöglichkeit als WPC bzw. Ki Leistungsübertragung. Die Gesamtleistung kann hier geringer sein als zuvor beschrieben, es wird aber auf alle Fälle eine signifikante Leistung übertragen. Da für diese Funktion standardmäßig auch eine Kommunikation mit dem Aufsatzgerät vorgesehen ist, weist das Kochfeld 11 den Antennenträger 22 auf, der gemäß der Darstellung in Fig. 2 mit zwei NFC-Antennen 28a und 28b bestückt ist. Zu dieser Art von Kommunikation ist nicht viel zu erläutern, auf den genannten bzw. bekannten Stand der Technik wird verwiesen. Der genaue Aufbau des Antennenträgers 22 wird weiter unten noch erläutert.

Des Weiteren ist es aber auch wichtig, erfassen zu können, welche Art von Gerät oder Gegenstand oberhalb der Induktionsheizeinrichtung 16 platziert ist. Bei bekannten auf dem Markt befindlichen Induktionskochfeldern sind sogenannte Topferkennungssensoren vorgesehen, häufig ausgebildet als induktive Sensoren, die Ort und auch in etwa Art eines Gegenstands auf der Kochfeldplatte 12 erfassen können, zumindest wenn er metallisch ist bzw. induktiv beheizt werden kann. Befindet sich nämlich ein strichpunktiert dargestellter metallischer Löffel L oberhalb der Induktionsheizeinrichtung 16, so soll dies erkannt werden und es muss verhindert werden, dass die Induktionsheizspule 17 mit Leistung betrieben wird. Ein solcher Löffel L soll sicherlich nicht beheizt werden, und an eine Bedienperson soll entsprechend ein Fehler ausgegeben werden können. Dies nennt sich auch FOD (Foreign Object Detection), und zum Erkennen eines solchen Gegenstands weist der Antennenträger 22 mehrere FOD-Sensoren 32 auf. Konkret sind es drei FOD-Sensoren 32a bis 32c, wobei jeder FOD-Sensor zwei Teilflächen aufweist, die elektrisch miteinander verbunden sind. Diese Teilflächen sind in etwa kreissegmentartig geformt und liegen sich jeweils gegenüber. Auch dies wird nachfolgend noch näher erläutert. So kann relativ zuverlässig auch ein kleinerer Gegenstand wie beispielsweise ein Löffel L oberhalb der Induktionsheizeinrichtung 16 erkannt werden, gegebenenfalls sogar seine Position. Auch dies funktioniert wie die zuvor genannten Topferkennungssensoren induktiv, so dass die FOD-Sensoren 32a bis 32c auch als Antennen angesehen werden können. Sie sollen aber keine Kommunikation ermöglichen, sondern nur etwas erfassen. Während die NFC-Antennen 28 mit hoher Frequenz von mehr als 10 MHz arbeiten, auch um ausreichende Kommunikation bzw. Informationsübertragung zu gewährleisten, können die FOD-Sensoren 32 mit erheblich geringerer Frequenz betrieben werden. Beispielsweise können sie mit weniger als 250 kHz betrieben werden, vorzugsweise mit in etwa einer Arbeitsfrequenz der Induktionsheizspule 17, welche kleiner bzw. gleich 75 kHz ist. Sowohl die NFC-Antennen 28 als auch die FOD-Sensoren 32 sind mittels Zuleitungen 30, 34 mit der Steuerung 20 zur Ansteuerung und Auswertung verbunden.

In der Draufsicht auf eine Bestückungsseite 26 des Antennenträgers 22 ist zu erkennen, dass dieser im Wesentlichen ein runder Träger 23 ist. Er besteht vorteilhaft aus einem eingangs genannten flexiblen Gewebe, vorteilhaft aus Glasfasergewebe odgl., welches flexibel und biegeschlaff ist. Der Antennenträger 22 ist nur auf der Bestückungsseite 26 bestückt bzw. mit Leitungen versehen, auf der anderen Seite überhaupt nicht. Eine Bestückung erfolgt mit Drähten als Leitungen, wie im Folgenden näher erläutert wird. Des Weiteren ist es auch möglich, andere Bauteile, insbesondere kleine Bauteile wie beispielsweise SMD-Bauteile, auf dem Träger 23 zu befestigen und elektrisch anzuschließen. Hierzu wird verwiesen auf die genannte EP 3079443 A1.

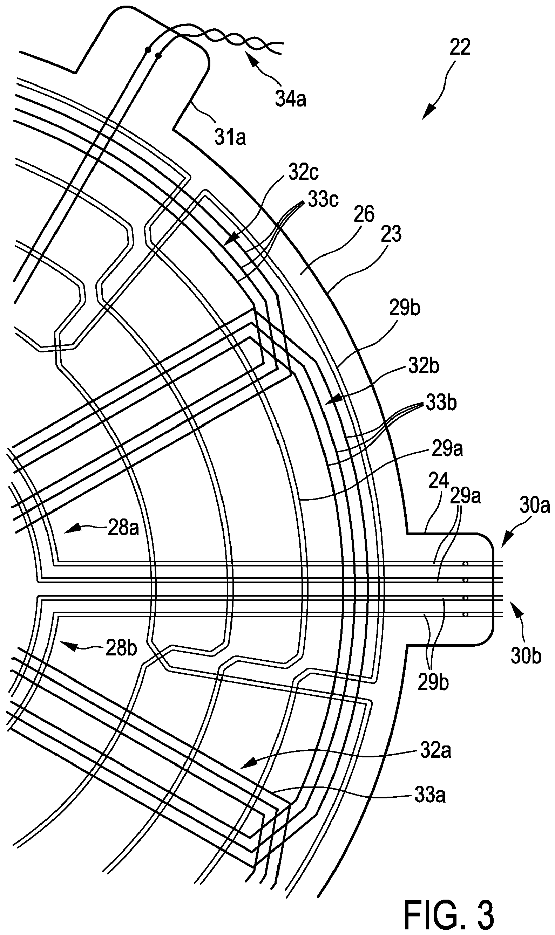

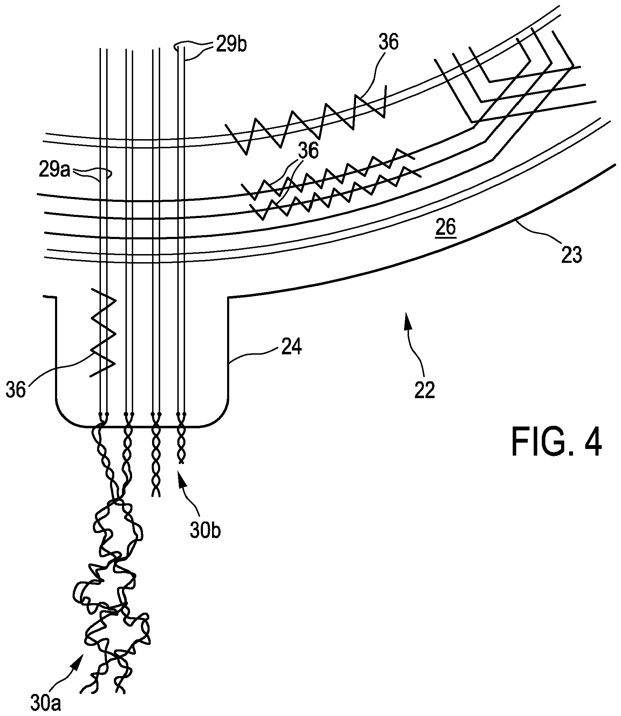

Die NFC-Antennen 28a und 28b werden von Leitungen 29a und 29b gebildet, welche dünne Drähte sind. Vorteilhaft bestehen diese Drähte aus Kupfer mit einem Durchmesser von 0,2 mm und hoher Güte bzw. geringem elektrischem Widerstand. Sie weisen eine für solche Drähte bekannte Isolierung mittels eines Isolierlacks auf, so dass sie nach außen elektrisch isoliert sind und nebeneinander verlaufen können ohne Kurzschluss. Vor allem können sie sich so auch überkreuzen, wie eingangs erläutert worden ist. Das Verlegemuster der Leitungen 29a und 29b bzw. deren Drähte für die NFC-Antennen 28a und 28b ist wie aus Fig. 2 zu erkennen etwas komplex, aber im Wesentlichen laufen beiden NFC-Antennen 28a und 28b rund um den Träger 23 um, wobei stufenweise der Radius variiert bzw. springt. An einem nach unten von der Außenseite des Trägers 23 abstehenden Überstandsbereich 24, der sozusagen eine Verlängerung des entsprechenden Gewebes ist, werden Zuleitungen 30a und 30b verlegt. Dies ist auch aus den Fig. 3 und 4 in Vergrößerung zu erkennen. Hier werden also die entsprechenden Leitungen 29a und 29b herangeführt, und sobald sie auf dem Träger 23 verlaufen, werden sie mittels Überstickungen 36 gemäß Fig. 4 fixiert. Zu erkennen ist aus der Fig. 4, dass für die NFC-Antennen 28a und 28b die Leitungen 29 sozusagen doppelt sind bzw. aus doppelt geführten Drähten bestehen, wobei die Drähte identisch sind. Dies weist den Vorteil auf, dass der elektrische Widerstand geringer ist, gerade auch wegen der vorgenannten hohen Frequenzen. Die Verwendung von zwei parallelen Leitungen 29 anstatt einer einzelnen mit dickerem Querschnitt bzw. größerem Drahtdurchmesser weist den Vorteil auf, dass diese dünneren Leitungen in engeren Radien verlegt werden können. Die Leitungen 29 können zwar jeweils einzeln mittels Überstickungen 36 befestigt werden, vorteilhaft können sie aber gedoppelt herangeführt und überstickt werden. Dabei ist es nicht zwingend notwendig, dass sie stets parallel verlaufen, sie können sich an einigen Stellen auch überkreuzen.

Aus der Vergrößerung der Fig. 4 ist auch zu erkennen, dass beispielsweise die Leitungen 29a und 29b für die NFC-Antennen 28a und 28b aus den gedoppelten und eng nebeneinander verlaufenden Drähten bestehen und gerade vom Hauptbereich des Trägers 23 bis auf den Überstandsbereich 24 geführt sind und mittels der Überstickungen 36 befestigt sind. Dabei wird jede Leitung 29a und 29b bzw. die gedoppelten Drähte jeweils einzeln überstickt, auch um sie gut auseinanderhalten zu können. Kurz vor dem äußeren Ende des Überstandsbereichs 24 hört die Überstickung 26 auf und die gedoppelten Drähte können miteinander verdrillt werden, müssen dies aber nicht. Um dann die frei verlaufenden Zuleitungen 30a und 30b zu bilden, können die jeweiligen Leitungen einer NFC-Antenne 28 noch einmal miteinander verdrillt werden, um Störungen zu reduzieren. Letztlich können auch die Zuleitungen 30a und 30b miteinander verdrillt werden, dies muss aber nicht sein. Ebenso können sie mit einer Art losen Umhüllung wie beispielsweise einem isolierenden Kunststoffschlauch versehen werden, der sie auch vor Beschädigung schützt. Dies ist aber an sich aus dem Stand der Technik bekannt. Diese Zuleitungen 30a und 30b können dann eine Länge von bis zu 40 cm oder 50 cm aufweisen und direkt an einen Anschluss, insbesondere an die Steuerung 20, geführt sein. Alternativ können sie an einen solchen elektrischen Anschluss auf einem Bauteilträger bzw. auf einer Leiterplatte angeschlossen sein, auf der auch die Steuerung 20 bzw. ein diese bildender Controller angeordnet ist. Dann braucht keine weitere elektrische Kontaktierung vorgesehen zu werden.

Die nähere Ausgestaltung der FOD-Sensoren 32a bis 32c ist aus den Fig. 2 und 3 ersichtlich. Jeder FOD-Sensor 32 besteht aus einer Art Spule mit drei Windungen, die in etwa trapezartig oder kreissegmentförmig ausgebildet sind. Deutlich zu erkennen ist die Überlappung von benachbarten FOD-Sensoren 32, und zwar voll. Des Weiteren ist auch zu erkennen, dass die drei parallel geführten Drähte als Leitungen 33 nicht um 90° abgewinkelt sind, sondern um größere Winkel, insbesondere um die Drähte besser führen zu können und auch um in den Überlappungsbereichen zu verhindern, dass allzu häufig zwei Abwinklungen unterschiedlicher FOD-Sensoren 32 genau übereinanderliegen. Die Zuleitungen 34 verlaufen dabei von außen an jeweils einen Überstandsbereich 31a bis 31c heran, wobei sie außerhalb davon verdrillt sein können, wie in den Fig. 2 und 3 für die Zuleitungen 34a dargestellt ist. Hier können die Zuleitungen 34a mit ähnlicher Länge wie die Zuleitungen 30 der NFC-Antennen 28 abstehen und auf selbe Art und Weise elektrisch angeschlossen sein. Sobald sie auf dem Träger 23 bzw. einem Überstandsbereich 31 sind, sind sie mittels Überstickungen 36 befestigt. Dann laufen die Zuleitungen erst einmal in den Mittelbereich des Trägers 32 und dann von dort aus jeweils zu den gegenüberliegenden Teil-FOD-Sensoren 32a bis 32c und 32a'bis 32c', welche dann wiederum miteinander verbunden sind. So kann erreicht werden, dass die Zuleitungen 34 von außen kommend in den Mittelbereich hinein keine FOD-Sensoren überqueren, deren elektrischen Anschluss sie selbst bilden.

Eine weitere Möglichkeit für einen elektrischen Anschluss der FOD-Sensoren 32 und der NFC-Antennen 28 wäre es, wenn sämtliche Zuleitungen 30 und 34 von den außen angeordneten Überstandsbereichen 24 und 31 wiederum nach innen in den Mittelbereich geführt sind. Dort könnte ein zentrales Loch im Träger 23 vorgesehen sein, durch welchen sie hindurchgeführt werden und somit auf der gegenüberliegenden Seite der Bestückungsseite 26 weggeführt werden. Des Weiteren könnten sie dann als eine Art gemeinsamer Kabelstrang geführt werden, was ihre Führung und den elektrischen Anschluss vereinfacht, insbesondere bei Montage des Kochfelds 11.

Vorteilhaft ist entsprechend der Fig. 1 vorgesehen, dass der Antennenträger 22 so zwischen Kochfeldplatte 12 und Induktionsheizeinrichtung 16 platziert ist, dass die Bestückungsseite 26 mit der gesamten Leiterstruktur nach unten weist, also zur Induktionsheizeinrichtung 16 hin. Dies weist den Vorteil auf, dass dann die elektrisch isolierende gegenüberliegende Seite des Antennenträgers 22, auf der vorteilhaft eben keinerlei Leitungen verlaufen, an der Unterseite 14 der Kochfeldplatte 12 anliegt. So kann gleich eine notwendige und vorteilhafte elektrische Isolierung gegenüber der Kochfeldplatte 12 erreicht werden. Zusätzliche elektrische Isolierungen wie beispielsweise eine dünne Mica-Platte odgl. sind nicht mehr notwendig.

Im Mittelbereich des Trägers 23 könnte auch ein Temperatursensor angeordnet sein, der als ein vorgenanntes separates Bauteil ausgebildet ist. Über herangeführte Leitungen bzw. Drähte, beispielsweise über einen der Überstandsbereiche 24 oder 31, könnte eine durch Überstickung befestigte Zuleitung verlaufen.

Vorteilhaft ist ein Antennenträger 22 aufgrund der verwendeten Materialien problemlos bis zu 200°C temperaturbeständig, ebenso ein Faden für das Sticken. Die Drähte als Leitungen bzw. als Zuleitungen sind mit entsprechend temperaturbeständigem Isolierlack versehen. Des Weiteren sind die Drähte durchgehend vorgesehen, so dass sie die Zuleitungen und die entsprechenden NFC-Antennen 28 und FOD-Sensoren 32 durchgängig und ununterbrochen bilden.

## Patentansprüche

1. Induktionskochfeld mit einer Kochfeldplatte und mit einer Trägerstruktur, wobei die Trägerstruktur flächig und flach ausgebildet ist und aufweist:
- ein flexibles Gewebe als flächiger und flacher Träger mit zwei Oberflächen,
- Antennen und/oder Sensoren auf dem Träger, wobei die Antennen und/oder die Sensoren als Leitungen mittels Stickverfahren zumindest auf einer Seite bzw. Oberfläche des Trägers aufgebracht und/oder befestigt sind,
- die Antennen und/oder die Sensoren Zuleitungen aufweisen, wobei die Zuleitungen mittels Stickverfahren auf dem Träger aufgebracht und/oder befestigt sind, wobei die Zuleitungen sich untereinander und/oder mit den Leitungen der Antennen und/oder mit den Sensoren auf derselben Oberfläche des Trägers kreuzen und dabei elektrisch gegeneinander isoliert sind,
- eine Temperaturbeständigkeit von ≥ 200°C,
wobei die Trägerstruktur auf einem flächigen und flachen Halter angeordnet ist und damit samt Antennen und/oder Sensoren direkt oder indirekt an einer Unterseite der Kochfeldplatte anliegt.

2. Induktionskochfeld nach Anspruch 1, **dadurch gekennzeichnet, dass** unter der Trägerstruktur mindestens eine Induktionsheizspule angeordnet ist zur induktiven Beheizung eines auf die Kochfeldplatte aufgestellten Kochgefäßes, wobei vorzugsweise mindestens eine Antenne und/oder mindestens ein Sensor mit weniger als ihrer gesamten Fläche über der Induktionsheizspule verläuft und/oder seitlich bzw. radial außen zumindest teilweise über die Induktionsheizspule übersteht.

3. Induktionskochfeld nach Anspruch 1 oder 2, **dadurch gekennzeichnet, dass** mindestens zwei Antennen und/oder Sensoren auf derselben Oberfläche des Trägers aufgebracht sind, wobei vorzugsweise alle Antennen und Sensoren auf derselben Oberfläche des Trägers aufgebracht sind.

4. Induktionskochfeld nach einem der vorhergehenden Ansprüche, **dadurch gekennzeichnet, dass** der Träger mindestens einen von dem Träger abstehenden Überstandsbereich aufweist, insbesondere mindestens drei Überstandsbereiche, die von dem Träger abstehen, wobei der Überstandsbereich aus demselben durchgängigen Gewebe des Trägers gebildet ist, wobei auf dem Überstandsbereich ein Abschnitt der Zuleitungen und/oder Antennen aufgebracht und/oder befestigt ist, wobei vorzugsweise auf einem Überstandsbereich entweder nur Zuleitungen zu den Antennen, insbesondere zu allen Antennen, oder nur Zuleitungen zu einem Sensor, insbesondere nur zu einem einzigen Sensor, aufgebracht und/oder befestigt sind.

5. Induktionskochfeld nach Anspruch 4, **dadurch gekennzeichnet, dass** der Träger mehrere Überstandsbereiche für Zuleitungen zu den Sensoren außen am Träger aufweist, wobei vorzugsweise ein Überstandsbereich mit einer Länge zwischen 5% und 20% von einem Außenrand des Trägers absteht, wobei insbesondere eine Breite eines Überstandsbereichs zwischen 30 % und 20 % der Länge des Überstandsbereichs beträgt.

6. Induktionskochfeld nach einem der vorhergehenden Ansprüche, **dadurch gekennzeichnet, dass** Antennen oder Sensoren sich überlappend angeordnet sind um alternierend benutzt zu werden.

7. Induktionskochfeld nach einem der vorhergehenden Ansprüche, **dadurch gekennzeichnet, dass** die Zuleitungen, vorzugsweise auch die Antennen und/oder Sensoren, aus ununterbrochenem Draht gebildet sind und die Leitungen der Antennen und/oder Sensoren bilden, wobei insbesondere die Antennen und/oder Sensoren und die Zuleitungen jeweils aus gemeinsamem ununterbrochenem Draht gebildet sind, wobei vorzugsweise der Draht ein einzelner Leiter und keine Mehrfachlitze ist.

8. Induktionskochfeld nach einem der vorhergehenden Ansprüche, **dadurch gekennzeichnet, dass** mindestens ein Sensor und/oder mindestens eine Antenne zwei parallel verlaufende Drähte als Leitung aufweisen, insbesondere die Antennen, wobei vorzugsweise die Drähte eine niederohmige Ausführung mit großer Güte aufweisen.

9. Induktionskochfeld nach einem der vorhergehenden Ansprüche, **dadurch gekennzeichnet, dass** die Zuleitungen verdrillt oder in einer Kreuzungsstruktur mittels Stickverfahren auf dem Träger befestigt sind zur Reduzierung von Einkopplungen von Störsignalen in die Zuleitung.

10. Induktionskochfeld nach einem der vorhergehenden Ansprüche, **dadurch gekennzeichnet, dass** die Antennen als NFC-Antennen oder RFID-Antennen ausgebildet sind, vorzugsweise mit einem gedoppelten Draht aus gleichem Material und gleicher Art.

11. Induktionskochfeld nach einem der vorhergehenden Ansprüche, **dadurch gekennzeichnet, dass** die Sensoren als FOD-Sensoren ausgebildet sind zur Erkennung von Objekten oder Gegenständen auf der Kochfeldplatte oberhalb der Trägerstruktur, wobei insbesondere die FOD-Sensoren als Spulen ausgebildet sind, vorzugsweise mit einem einzelnen Draht ausgebildet sind, wobei insbesondere sich benachbart liegende FOD-Sensoren überlappen und sich ihre Leitungen dabei kreuzen, wobei vorzugsweise die FOD-Sensoren in der Form von Kreissegmenten ausgebildet sind und insbesondere gleichartig und gleich groß ausgebildet sind und/oder gegenüberliegend angeordnet sind.

12. Induktionskochfeld nach Anspruch 11, **dadurch gekennzeichnet, dass** die Trägerstruktur vier bis acht FOD-Sensoren pro Induktionsheizspule aufweist und jeweils zwei FOD-Sensoren elektrisch miteinander verbunden sind und nach außen elektrisch angeschlossen sind mit zwei Zuleitungen, wobei insbesondere die zwei FOD-Sensoren gegensinnig gewickelt sind, wobei vorzugsweise jeweils zwei FOD-Sensoren sich gegenüberliegen.

13. Induktionskochfeld nach Anspruch 11 oder 12, **dadurch gekennzeichnet, dass** genau eine erste Zuleitung für FOD-Sensoren zu dem Träger läuft, auf diesem einen FOD-Sensor bildet als Spule mit Verlauf von außen nach innen, dann durch den Mittelbereich des Trägers zu dem gegenüberliegenden Bereich des Trägers verläuft und den anderen FOD-Sensor bildet als Spule mit Verlauf von innen nach außen, und dann als die andere zweite Zuleitung neben der ersten Zuleitung von dem Träger weg läuft.

14. Induktionskochfeld nach einem der vorhergehenden Ansprüche, **dadurch gekennzeichnet, dass** eine elektrische Verbindung von parallel verlaufenden Drähten in dem Bereich eines Anschlusses an eine Steuerung elektrisch verbunden ist.

15. Induktionskochfeld nach einem der vorhergehenden Ansprüche, **dadurch gekennzeichnet, dass** die Zuleitungen von der Trägerstruktur abstehen und ununterbrochen weiterlaufen als Anschluss an eine Steuerung, vorzugsweise mit einer Länge von mindestens 20 cm, insbesondere mit einer Länge von mindestens 50 cm.

16. Induktionskochfeld nach einem der vorhergehenden Ansprüche, **dadurch gekennzeichnet, dass** zwischen der Trägerstruktur mit den Zuleitungen, Antennen und/oder Sensoren und der Unterseite der Kochfeldplatte eine elektrische Isolierung vorgesehen ist, insbesondere eine flächige elektrische Isolierung, wobei vorzugsweise die elektrische Isolierung eine eigenständig handhabbare Baueinheit ist oder durch den Träger selbst gebildet ist, indem der Träger mit einer Unterseite, auf der keine Zuleitungen, Antennen und/oder Sensoren aufgebracht und/oder befestigt sind, an der Unterseite der Kochfeldplatte als elektrische Isolierung anliegt.

17. Verfahren zur Herstellung einer Trägerstruktur für ein Induktionskochfeld nach einem der vorhergehenden Ansprüche, mit den Schritten:
- Bereitstellen eines flexiblen Gewebes als flächiger und flacher Träger mit zwei Oberflächen,
- Antennen und/oder Sensoren werden zumindest auf eine Seite bzw. Oberfläche des Trägers mittels Stickverfahren aufgebracht und/oder befestigt,
- Zuleitungen für die Antennen und/oder die Sensoren werden mittels Stickverfahren auf den Träger aufgebracht und/oder befestigt sind, wobei die Zuleitungen untereinander und/oder mit den Antennen und/oder mit den Sensoren auf derselben Oberfläche des Trägers gekreuzt werden und dabei elektrisch gegeneinander isoliert sind.

18. Verfahren nach Anspruch 17, **dadurch gekennzeichnet, dass** die Zuleitungen verdrillt werden oder in einer Kreuzungsstruktur mittels Stickverfahren auf dem Träger befestigt werden zur Reduzierung von Einkopplungen von Störsignalen in die Zuleitung.

19. Verfahren nach Anspruch 17 oder 18, **dadurch gekennzeichnet, dass** auf einem Überstandsbereich nach Anspruch 4 oder 5 mindestens eine Zuleitung zu mindestens einer Antenne und/oder mindestens einem Sensor aufgebracht und/oder befestigt wird, wobei vorzugsweise nach Fertigstellung der Trägerstruktur die mindestens eine Zuleitung von dem Überstandsbereich wieder gelöst wird und anders verlegt wird, insbesondere wieder auf den Träger oder auf die Trägerstruktur gelegt wird bzw. auch darauf befestigt wird, und vorzugsweise bis zu einem Anschlussbereich des Trägers geführt wird, von dem aus mehrere Zuleitungen zu den Antennen und/oder Sensoren weg geführt sind nach außen.

20. Verwendung einer Trägerstruktur für ein Induktionskochfeld, wobei die Trägerstruktur flächig und flach ausgebildet ist und aufweist:
- ein flexibles Gewebe als flächiger und flacher Träger mit zwei Oberflächen,
- Antennen und/oder Sensoren auf dem Träger, wobei die Antennen und/oder die Sensoren mittels Stickverfahren zumindest auf einer Seite bzw. Oberfläche des Trägers aufgebracht und/oder befestigt sind,
- die Antennen und/oder die Sensoren Zuleitungen aufweisen, wobei die Zuleitungen mittels Stickverfahren auf dem Träger aufgebracht und/oder befestigt sind, wobei die Zuleitungen sich untereinander und/oder mit den Antennen und/oder mit den Sensoren auf derselben Oberfläche des Trägers kreuzen und dabei elektrisch gegeneinander isoliert sind,
- eine Temperaturbeständigkeit von ≥ 200°C,
wobei die Trägerstruktur auf einem flächigen und flachen Halter angeordnet ist und damit samt Antennen und/oder Sensoren direkt oder indirekt an einer Unterseite der Kochfeldplatte anliegt,
wobei das Induktionskochfeld eine Vorrichtung zur drahtlosen Kommunikation und/oder zum drahtlosen Übertragen von Energie in Richtung eines elektrischen Verbrauchers auf dem Induktionskochfeld mittels induktiver Kopplung aufweist, wobei vorzugsweise eine Induktionsheizspule des Induktionskochfelds als Vorrichtung zur drahtlosen Kommunikation und/oder zum drahtlosen Übertragen von Energie verwendet wird.
